# EUROPEAN PATENT APPLICATION

(11) **EP 4 230 446 A1**
(43) Date of publication of application: **23.08.2023**
(21) Application number: 23156984.9
(22) Date of filing: 16.02.2023
(51) Int. Cl.: B60G 7/00, B60G 13/00, B60G 15/07

(54) **SUSPENSION WITH BUSHING HAVING INCLINED FIXING AXIS AND RELATIVE ROAD VEHICLE**

(30) Priority: 17.02.2022 IT 202200002969
(71) Applicant: FERRARI S.p.A., 41100 Modena (IT)
(72) Inventor: BERGAMINI, Stefano, 41100 Modena (IT)
(74) Representative: Studio Torta S.p.A.

(57) **Abstract**

Suspension (3) for a road vehicle (1) comprising: a swinging arm (7); a shock absorber (10) connected by means of a joint (13) to the swinging arm (7); wherein the joint (13) comprises a central support element (14) and a bifurcated element (15) joined together by a fixing element (16); the joint (13) comprises at least one bushing (20) supported by the support element; the bushing (20) comprising at least a first ring-shaped portion (21) provided with a passing through hole (22) which, in use, is crossed by the fixing element (16); the first ring-shaped portion (21) having an outer surface (23) which develops around a first axis (A1) of symmetry and an inner surface (24) which develops around a second axis (A2) of symmetry different from the first axis (A1) of symmetry.

## Description

### CROSS-REFERENCE TO RELATED APPLICATIONS

This patent application claims the priority of Italian patent application no. 102022000002969 filed on February 17, 2022, the entire disclosure of which is incorporated herein by reference.

### TECHNICAL FIELD

The present invention relates to a suspension with a bushing having an inclined fixing axis and a related road vehicle.

In particular, the present invention can be employed advantageously, but not exclusively, in a rear suspension for high-performance vehicles, to which the following description will make explicit reference without any consequent loss in generality.

### BACKGROUND OF THE INVENTION

Different types of suspensions for road vehicles are known, which are generally identified as connecting elements between the suspended masses and the non-suspended masses of a road vehicle, in other words the set of components that connect the frame to the wheels of the road vehicle.

Different types of suspension (low or high quadrilateral, MacPherson, multilink, etc.) share at least the presence of a shock absorber connected to a (lower) arm of the suspension (or to the hub carrier of the wheel) via a joint. Generally, the lower arm connects the vehicle frame to the hub carrier of the wheel.

Said joint generally consists of a ball joint, which, however, while guaranteeing an acceptable fatigue life of the joint, has disadvantages in terms of acoustic comfort, inasmuch as it is a source of unwanted noise during the movement of the suspension.

To try to overcome this problem, attempts have been made in recent years to use a bushing crossed by a fixing element which interconnects the shock absorber or a portion integral with it and the aforementioned suspension arm (or hub carrier). The bushing is mounted on a support element which, depending on the type of suspension, can be either the shock absorber or said suspension arm.

Based on the kinematics of the suspension and the space available at the wheel well, however, it is possible that the axis of the fixing element and the axis of the support element (shock absorber or arm/lever on which the bushing is mounted) are not exactly perpendicular.

In the case of conventional rubber-metal bushings, this lack of orthogonality causes conical stresses even in resting conditions on the rubber of the bushing, which particularly suffers fatigue life conditions. In other words, in conditions other than orthogonality, the bushing is continually subjected to asymmetrical stress, which causes its rapid deterioration and renders its replacement necessary after a short period of time.

The document US8061726 describes a suspension for a road vehicle comprising a swinging arm and a shock absorber.

The document JP2002362123 describes a suspension for a road vehicle with a swinging arm and a bifurcated element connected by a symmetrical bushing.

The document DE3613123 describes a bushing with asymmetrical axes for components of the frame, not for suspensions.

The document DE102004013554 describes a bushing with asymmetrical axes for components of the frame, not for suspensions.

The object of the present invention is to provide a suspension with a bushing having an inclined fixing axis and a relative road vehicle, which are free of the drawbacks described above and, at the same time, are simple and inexpensive to produce.

### SUMMARY

According to the present invention, a suspension with a bushing having an inclined fixing axis and a relative road vehicle are provided as claimed in the following independent claims and, preferably, in any of the claims depending directly or indirectly on the independent claims.

The claims describe preferred embodiments of the present invention and thus form an integral part of the present description.

### BRIEF DESCRIPTION OF THE DRAWINGS

The present invention will now be described with reference to the accompanying figures, which illustrate non-limiting embodiments thereof, wherein:

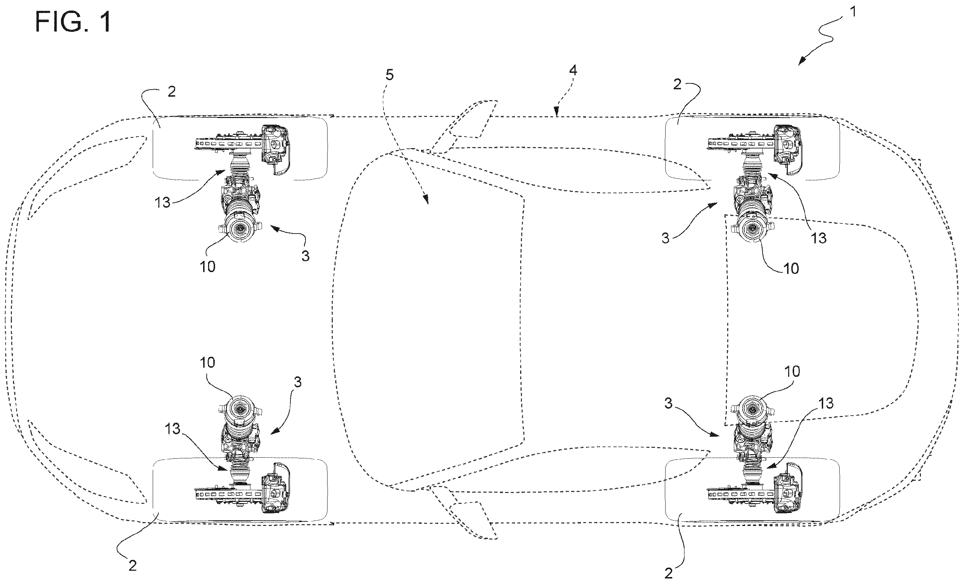

- Figure 1 is a schematic plan view, with details removed for clarity, of a road vehicle provided with suspensions according to a first embodiment of the present invention;
- Figure 2 is a schematic perspective view, with details removed for clarity, of a suspension of the vehicle of Figure 1; and
- Figure 3 is a sectional view of part of a suspension according to the prior art;
- Figure 4 is a side sectional view, with details removed for clarity, of a part of a suspension according to a second embodiment of the present invention.

### DETAILED DESCRIPTION

With reference to the attached figures, a road vehicle configured to be driven by a driver and provided with four wheels 2, two front and two rear (e.g. drive) wheels 2, is indicated as a whole by 1. In particular, each of the wheels 2 is connected to a respective suspension 3. The vehicle 1 is further provided with a body 4, defining, among other things, a passenger compartment 5 designed to accommodate at least the driver.

The same reference numbers and letters in the figures identify the same elements or components with the same function.

In the context of this description, the term "second" component does not imply the presence of a "first" component. These terms are in fact employed as labels to enhance clarity and are not to be understood in a limiting manner.

The elements and features illustrated in the different preferred embodiments, including drawings, can be combined with one another without departing from the scope of protection of this application as described in the following.

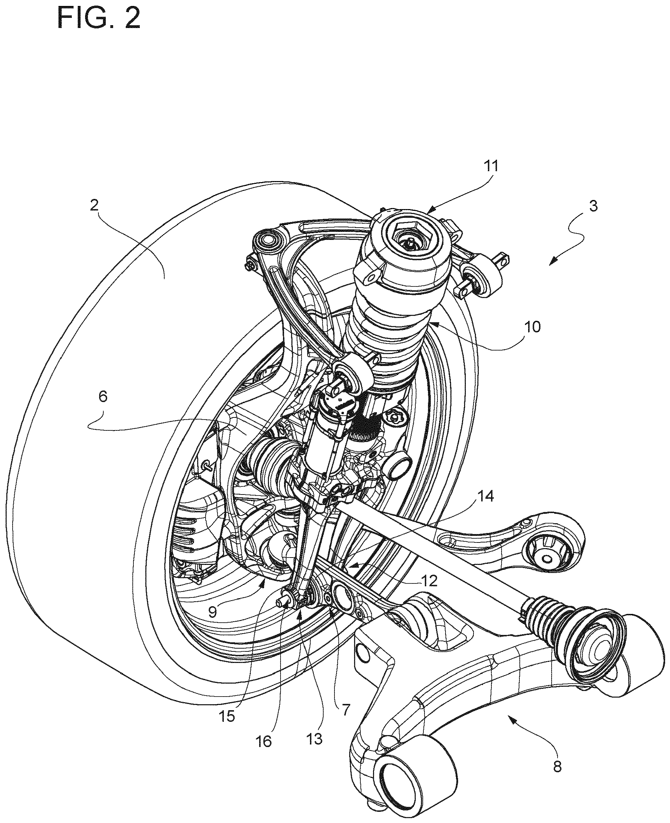

In particular, with reference to the non-limiting embodiment of Figure 2, each drive wheel 2 is provided with a respective hub carrier 6 (of a known type and thus not described in further detail in the following).

As mentioned in the foregoing, the vehicle 1 comprises at least one suspension 3 (for example, but not limited to, the type illustrated in Figure 2). In particular, at least both drive wheels 2, for example rear drive wheels 2, are each provided with a respective suspension 3 as described in the following.

The suspension 3 comprises at least one (in particular lower) swinging arm 7, which in turn comprises a first end 8 and a second end 9, opposite to each other, wherein the first end 8 is configured to be connected to a first portion of the body (in particular of a vehicle frame) and the second end 9 is connected to a hub carrier 6 of a wheel 2.

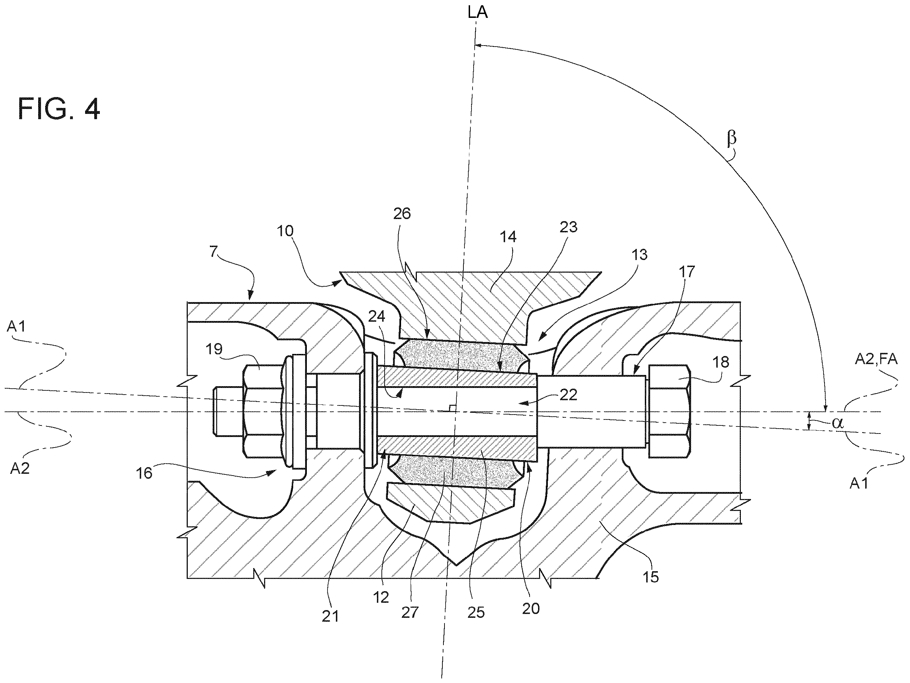

In particular, the suspension 3 further comprises a shock absorber 10, which in turn is provided with a third end 11 and a fourth end 12, opposite to each other, wherein the third end 11 is connected to a second portion of the body 4 (in particular of the frame) and the fourth end 12 is connected by means of a joint 13 to the swinging arm 7. Specifically, the joint 13 comprises a central support element 14 and a bifurcated element 15, which are joined together (preferably crossed) by a fixing element 16. For example, as illustrated in the non-limiting embodiment of Figure 4, the fixing element comprises a bolt 17, i.e. a screw 18 and a nut 19 coupled together.

Alternatively, not limitingly, the fourth end is connected by means of the joint 13 directly to the hub carrier (for example in the case of a MacPherson-type suspension).

In some non-limiting cases, such as the one illustrated in the non-limiting embodiment of Figure 2, the second end 9, i.e. the swinging arm 7, comprises the central support element 14, while the bifurcated element 15 is defined by the fourth end 12 of the shock absorber 10.

In other preferred non-limiting cases, such as the one illustrated in the non-limiting embodiment of Figure 4, the second end 9, i.e. the swinging arm 7, comprises the bifurcated element 15, while the central support element 14 is defined by the fourth end 12 of the shock absorber 10.

Advantageously, the joint 13 comprises at least one bushing 20, which is supported by the support element 14; in particular, the bushing 20 is mounted at the support element 14, for example by interference. In particular, not limitingly, the bushing 20 is of the rubber-metal type, i.e. having an inner metal portion and an outer rubber portion.

Preferably, as illustrated in the non-limiting embodiment of Figure 4, the bushing 20 comprises at least a first ring-shaped (i.e. annular) portion 21 provided with a passing through hole 22 which, in use, is crossed by the fixing element 16. In particular, the first ring-shaped portion 21 is provided with an outer surface 23 which develops around a first axis A1 of symmetry (at a substantially constant distance from the latter) and an inner surface 24 which develops around a second axis A2 of symmetry (at a substantially constant distance from the latter) different from the first axis A1 of symmetry.

Advantageously, but not limitingly, the first axis A1 of symmetry and the second axis A2 of symmetry are inclined to each other, defining a compensation angle (α).

In particular, the axis A2 of symmetry coincides with a longitudinal fixing axis FA of the fixing element 16, more specifically of the screw 18.

In some preferred non-limiting cases, the compensation angle α is equal to the angular difference, under static load (i.e. when the vehicle 1 is stationary), between a right angle and the angle β between a longitudinal axis LA of the central support element 14 (i.e. an axis perpendicular to the outer surface 23 of the first portion 21 of the bushing 20) and the second axis A2 of symmetry (i.e. coinciding with the fixing axis FA). In other words, the sum of the compensation angle α and the angle β is equal to 90°.

In the non-limiting embodiment of Figure 4, preferably, the longitudinal axis LA of the central support element 14 coincides with the longitudinal axis of the shock absorber 10. In other words, the shock absorber 10 is inclined (along a direction of travel of the vehicle 1) with respect to a vertical axis.

Advantageously but not necessarily, the compensation angle α is less than 20°, preferably less than 10°, in particular less than 5°, especially less than or equal to 3° .

According to the non-limiting embodiment of Figure 4, the first ring-shaped portion 21 comprises, between the outer surface 23 and the inner surface 24, a side wall 25 having a variable thickness (linearly), in particular specular with respect to the second axis A2 of symmetry. In particular, the first ring-shaped portion 21 is mainly (in particular entirely) made of metal, preferably of steel.

For example, the first ring-shaped portion 21 is obtained by providing an oblique passing through hole 22, with an axis of symmetry that coincides with the axis A2, along a solid metal cylinder, whose respective axis of symmetry would coincide with the axis A1. The inner surface of the through hole 22 thus corresponds to the inner surface 24 of the first ring-shaped portion 21, while the lateral surface of the previously solid cylinder coincides with the outer surface 23.

Advantageously but not necessarily, the bushing 20 comprises a second ring-shaped portion 26, arranged concentrically outside the first ring-shaped portion 21 (and in contact with the latter) and developing around the first axis A1 of symmetry (at a substantially constant distance from the latter). In particular, the second ring-shaped portion 26 comprises a side wall 27 having a uniform thickness.

Preferably but not limitingly, the second ring-shaped portion 26 is mainly (in particular entirely) made of a polymeric material, more specifically of an elastomeric compound, preferably having a base of natural rubber.

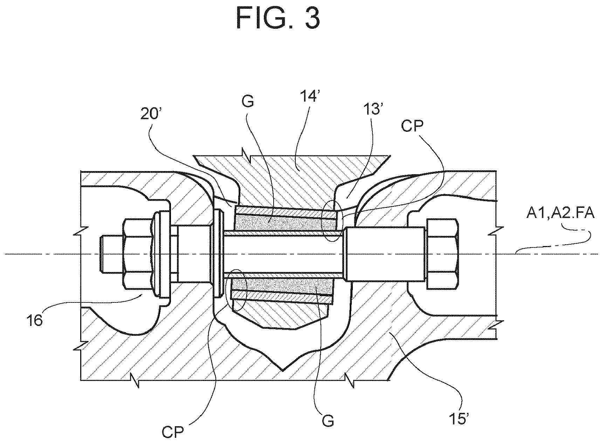

Figure 3 illustrates a solution with a known bushing (wherein the reference numbers for the same objects are employed with the single quote mark '), the bushing 20' namely being a common rubber-metal bushing. In such a solution, it is possible to observe that the lack of exact orthogonality between the central support element 14' (i.e. between the axis LA) and the axis FA' places the bushing 20' under stress even in conditions of static load. Specifically, the rubber G appears constantly compressed in the flattened portions CP due to the conical stress that essentially continuously twists the bushing 20' during use. Rubber, in general, suffers particularly from this type of stress so that the life of the bushing 20' is compromised.

According to the foregoing description, however, the axis A1 of the bushing 20 (see Figure 4) is exactly perpendicular to the axis LA of the central support element 14 (which coincides, for example, with the axis of the shock absorber 10) while at the same time, thanks to the inclination of the angle α between the axis A1 and the axis A2, the fixing element 16 that crosses the bushing 20 lies inside the passing through hole 22 while resting in a uniform manner on the inner surface 24, thus avoiding stress on the second ring-shaped portion in conditions of static load.

Advantageously but not necessarily, the angle α varies depending on the kinematics of the suspension 3, i.e. the model of the road vehicle 1.

In some non-limiting cases, the vehicle 1 comprises a suspension 3 for each of its four wheels 2. In particular, the compensation angle α between suspensions 3 coupled to the front wheels 2 and suspensions 3 coupled to the rear wheels 2 is different.

In the non-limiting embodiment of Figure 4, the compensation angle α is due to an inclination of the shock absorber 10 towards the front of the road vehicle 1 (with respect to an ideal vertical axis).

In use, the inclination of the passing through hole 22 of the bushing 20 allows the load on the rubber of said bushing 20 (i.e. on the second ring-shaped portion 26) to be reduced. In particular, during the known compression and rebound phases of the suspension 3, the conical angle to which the bushing 20 is subjected oscillates by a few degrees (for example ±1°) around zero (a condition possible precisely thanks to the inclination between the axes A1 and A2, i.e. the inclination of α of the passing through hole 22). In contrast, in conditions with known bushings, such as the one illustrated in Figure 3, the conical angle to which the bushing 20' is subjected oscillates by a few degrees (for example ±1°) around the already existing angle in a condition of static load. Consequently, for example, the conical angle to which the bushing 20' is subjected oscillates between 4° and 2°, or between 5° and 3°, respectively during compression and rebounding.

Although the invention described in the foregoing makes particular reference to a very precise example embodiment, it is not to be considered limited to this example embodiment, all variants, modifications or simplifications covered by the appended claims falling within its scope, such as, for example, a different type of suspension, a different type of vehicle (for example with a different drive), a different shape of the swinging arm or of the shock absorber, different compensation angles, etc.

The present invention has numerous advantages.

First of all, it allows the reduction of fatigue loads on the components of the suspension while simultaneously permitting the improvement of the clearances with respect to adjacent components.

Furthermore, by reducing the conical angles to which the bushing is subjected, the associated fatigue stresses are reduced so that the fatigue life of the component is actually extended.

A further advantage of the present invention lies in the elimination of the ball joint, thus improving acoustic comfort due to the reduction of noise that is audible from the vehicle passenger compartment.

In addition, greater flexibility in terms of design is permitted inasmuch as it is possible to manage the dimensions of the suspension more effectively by compensating misalignments in the respective kinematics.

Finally, the present invention is easy to implement, thus allowing already existing suspensions to be easily modified.

### LIST OF REFERENCE SIGNS IN THE FIGURES

- 1: vehicle
- 2: wheels
- 3: suspension
- 4: body
- 5: passenger compartment
- 6: hub carrier
- 7: arm
- 8: first end
- 9: second end
- 10: shock absorber
- 11: third end
- 12: fourth end
- 13: joint
- 14: central support element
- 15: bifurcated element
- 16: fixing element
- 17: bolt
- 18: screw
- 19: nut
- 20: bushing
- 21: first ring-shaped portion
- 22: passing through hole
- 23: outer surface
- 24: inner surface
- 25: side wall
- 26: second ring-shaped portion
- 27: side wall
- A1: axis of symmetry
- A2: axis of symmetry
- CP: flattened portions
- FA: fixing axis
- G: rubber
- LA: longitudinal axis
- α: compensation angle
- β: angle between FA and LA

## Claims

1. Suspension (3) for road vehicle (1) comprising:
- at least one swinging arm (7) comprising a first end (8) and a second end (9), opposite to each other, wherein the first end (8) is configured to be connected to a first portion of a vehicle body and the second end (9) is connected to a hub carrier (6) of a wheel (2)
- a shock absorber (10) comprising a third end (11) and a fourth end (12) opposite to each other, wherein the third end (11) is configured to be connected to a second portion of the vehicle body and the fourth end (12) is connected, by means of a joint (13) to the swinging arm (7); wherein the joint (13) comprises a central support element (14) and a bifurcated element (15) joined together by a fixing element (16);
the suspension (3) being **characterised in that** the joint (13) comprises at least one bushing (20) supported by the support element; the bushing (20) comprising at least a first ring-shaped portion (21) provided with a passing through hole (22) which, in use, is crossed by the fixing element (16); the first ring-shaped portion (21) having an outer surface (23) which develops around a first axis (A1) of symmetry and an inner surface (24) which develops around a second axis (A2) of symmetry different from the first axis (A1) of symmetry.

2. Suspension (3) according to claim 1, wherein the first axis (A1) of symmetry and the second axis (A2) of symmetry are inclined to each other, defining a compensation angle (α).

3. Suspension (3) according to claim 2, wherein the compensation angle (α) is equal to the angular difference, under static load, between a right angle and the angle between a longitudinal axis (LA) of the central support element (14) and the first axis (A1) of symmetry.

4. Suspension (3) according to claim 3, wherein the longitudinal (LA) axis of the central support element (14) coincides with the longitudinal (LA) axis of the shock absorber (10).

5. Suspension (3) according to any one of claims 2 to 4, wherein the compensation angle (α) is less than 10°, in particular less than 5°.

6. Suspension (3) according to any one of the preceding claims, wherein the first ring-shaped portion (21) comprises, between the outer surface (23) and the inner surface (24), a side wall (25) having a variable thickness, in particular specular with respect to the second axis (A2) of symmetry.

7. Suspension (3) according to any one of the preceding claims, wherein the first ring-shaped portion (21) is mainly made of metal, in particular of steel.

8. Suspension (3) according to any one of the preceding claims, wherein the bushing (20) comprises a second ring-shaped portion (26) concentrically arranged outside the first ring-shaped portion (21) and developing around the first axis (A1) of symmetry.

9. Suspension (3) according to claim 8, wherein the second ring-shaped portion (26) is mainly made of a polymeric material, in particular of an elastomeric compound.

10. Suspension (3) according to any one of the preceding claims, wherein the second end (9) comprises the central support element (14) and the fourth end (12) comprises the bifurcated element (15).

11. Road vehicle (1) comprising:
- four wheels (2), at least two of which are driven, each equipped with a respective hub carrier (6);
- a vehicle body
- at least one suspension (3) according to any one of the preceding claims;
wherein the first end (8) is connected to a first portion of the vehicle body and the second end (9) is connected to the respective hub carrier (6) of a wheel (2);
wherein the third end (11) is connected to a second portion of the vehicle body.

12. Vehicle (1) according to claim 11, wherein at least both rear wheels (2) are each provided with a respective suspension (3) according to claims 1 to 10.
